# EUROPÄISCHE PATENTSCHRIFT

(11) **EP 4 374 817 B1**
(45) Veröffentlichungstag und Bekanntmachung des Hinweises auf die Patenterteilung: **28.01.2026**
(21) Anmeldenummer: 22209641.4
(22) Anmeldetag: 25.11.2022
(51) Int. Cl.: A61C 13/00, B23Q 3/00

(54) **DENTALES BEARBEITUNGSSTÜCK**
DENTAL WORKPIECE
PIÈCE DE TRAITEMENT DENTAIRE

(43) Veröffentlichungstag der Anmeldung: 29.05.2024
(73) Patentinhaber: Steger, Heinrich, 39032 Sand in Taufers (IT)
(72) Erfinder: Steger, Heinrich, 39032 Sand in Taufers (IT)
(74) Vertreter: Schwarz & Partner Patentanwälte GmbH

(56) Entgegenhaltungen:
- EP-A2- 2 754 408
- WO-A1-2015/022296
- WO-A1-2019/063127
- DE-A1- 102014 015 423
- DE-U1- 202010 018 128
- DE-U1- 202014 103 291
- US-A1- 2003 073 394
- US-A1- 2016 158 903
- US-A1- 2018 055 612

## Beschreibung

Die Erfindung betrifft ein dentales Bearbeitungsstück bzw. einen Rohling zur Herstellung einer Dentalrestauration insbesondere Abutment, Krone, Brücke oder Schnappverbindung mit einem Bearbeitungsbereich, der von einem dentalen Bearbeitungsgerät bearbeitbar ist, und der einen zylindrischen Grundkörper mit einer Längsachse, einer Deckfläche, einer Grundfläche und einer Mantelfläche aufweist, und einem Befestigungsbereich zur Befestigung des Bearbeitungsstücks an einem Halter des Bearbeitungsgeräts. Außerdem betrifft die Erfindung einen Halter zum Halten eines dentalen Bearbeitungsstücks, ein Set mit zumindest einem solchen Bearbeitungsstück und einem solchen Halter und ein dentales Bearbeitungsgerät.

### HINTERGRUND DER ERFINDUNG

In der Dentalindustrie müssen verschiedenste Teile, welche einen Zahnersatz bilden, hergestellt werden. Mithilfe von Bearbeitungsgeräten wie z.B. CNC-Maschinen, welche Bearbeitungsköpfe zum Fräsen oder Schleifen aufweisen, können aus dentalen Bearbeitungsstücken, das heißt Dentalrohlingen, mit standardisierten Geometrien unterschiedlich geformte Abutments, Kronen, Brücken oder dergleichen hergestellt werden.

Die Bearbeitung der Dentalrohlinge erfolgt meist auf sehr teuren, industriellen Werkzeugmaschinen und erfordert einen beträchtlichen Arbeitsaufwand. Die hergestellten Abutments müssen dabei unterschiedlichste, an den Patienten angepasste, Formen aufweisen und beispielsweise gerade sowie abgewinkelt ausgeführt sein.

Ein dentales Bearbeitungsstück samt Halter wird beispielsweise in DE 20 2014 103 291 U1 offenbart. Die Bearbeitung des Bearbeitungsstücks in der Bearbeitungsmaschine erfolgt dabei rechtwinklig zur Längsachse des dentalen Bearbeitungsstücks.

DE 102014015423A1 offenbart einen Rohling, welcher entlang der Längsachse des Rohlings aus dem eigentlichen Rohlingsmaterial, einem Element für die Anschlussgeometrie für das aus dem Rohling herzustellende zahntechnische Bauteil, und einer umschließenden Fassung besteht. Die umschließende Fassung ist dabei so ausgebildet, dass sie die Halterung an der Fräsmaschine umschließen kann und der Rohling dadurch ebenfalls senkrecht zum Bearbeitungsgerät platziert ist.

Ein in EP 2754408 A2 offenbarte Rohling umfasst mindestens ein Eingriffselement, welches sich in Form einer Rippe oder Nut entlang des Körpers des Rohlings erstreckt. Mit einem Haltelement, welches entsprechend ausgebildet ist, kann der Rohling an einer Haltevorrichtung befestigt werden, indem dies längsseitig in die Rippe bzw. Nut eingreift. Nach Bearbeitung des Rohlings ist eine ausführlichere Nachbearbeitung erforderlich, da die Bereiche unterhalb der Haltevorrichtung während der Bearbeitung nicht frei zugänglich sind.

In US 20030073394A1 wird ein zweigeteilter Rohling offenbart, dessen Fräsabschnitt und Trageabschnitt, mit einem Schaft zur Befestigung in einer Fräsmaschine, mittels eines Vorsprungs an der Grundseite des Fräsabschnitts und einer Ausnehmung am Trageabschnitt ineinandergesteckt und damit verbunden werden.

Das in WO 2015022296 A1 offenbarte Haltevorrichtung umfasst eine Spannvorrichtung oder Klemmvorrichtung, bei welcher das Bearbeitungsstück von einer Klemmbacke umschlossen wird.

Zusammenfassend liegt allen Rohligen bzw. Haltesystemen in den angeführten Dokumenten die gleiche Problematik zugrunden. Alle offenbarten Rohlinge sind dafür ausgelegt senkrecht zu ihrer Längsachse bearbeitet zu werden. Dies ist auf die Anordnung des Bereiches, der mit dem dafür vorgesehenen Halter korrespondiert, zurückzuführen. Daher ist es nicht möglich speziell angepasste Gewinde in das Bearbeitungsstück zu fräsen, um damit auch unterschiedlich abgewinkelte Abutments mit verschiedenen formschlüssigen Verbindungen wie zum Beispiel einer Schraubverbindung zu ermöglichen. Außerdem ist es auch nicht möglich, das Bearbeitungsstück mehrmalig zu repositionieren, das heißt z.B. ein- und ausspannen, und auch ein- oder mehrmalig, einzeln oder als Baugruppe in Verbindung mit anderen Elementen, wie z.B. einer Verschlussschraube, keramischer Verblendungen, Oberflächenbehandlungen, etc. zu bearbeiten, da die Haltesysteme mit reibschlüssigen Verbindungen arbeiten.

Eine Bearbeitung parallel zur Längsachse ist beispielsweise in US 2018/0055612 A1 offenbart. Das Dokument offenbar einen Fräsrohling für dentale CAD/CAM zur Anfertigung einer Zahnrestauration durch Einbau in eine CAD/CAM-Vorrichtung. Aus dem Fräsrohling wird jedoch nicht nur eine patientenbezogene Zahnrestaurants ausgefräst, sondern es sollen möglichst viele Zahnersätze aus einem Rohling ausgefräst werden.

### KURZE BESCHREIBUNG DER ERFINDUNG

Der Erfindung liegt daher die Aufgabe zugrunde ein dentales Bearbeitungsstück und einen Halter bereitzustellen, welche es ermöglichen, äußerst präzise und genau auch mit kleineren Werkzeugmaschinen Bauteile für den Zahnersatz zu erstellen, welche patientenbezogen auf sehr einfache Weise individuell angepasst gefertigt werden können.

Gelöst wird diese Aufgabe durch ein dentales Bearbeitungsstück bzw. einen Rohling nach Anspruch 1 sowie ein Verfahren nach Anspruch 11.

Durch die Bearbeitung parallel zur Längsachse des Bearbeitungsstücks lässt sich dieses äußerst flexibel bearbeiten und es können auch verschiedene formschlüssige Verbindungen wie beispielsweise Gewindebohrungen und dergleichen in das Bearbeitungsstück eingebohrt werden. Durch die erfindungsgemäße Anordnung des Befestigungsbereichs um einen Abschnitt des Bearbeitungsbereichs, kann der Bearbeitungsbereich auch stirnseitig über den gesamten Bereich bearbeitet werden. Indem der Rohling am Befestigungsbereich im Halter montiert wird, kann bei einer Bearbeitung parallel zur Längsachse auch der Bereich unterhalb des Befestigungsbereichs bearbeitet werden, um welchen der Befestigungsbereich angeordnet ist. Es können am fertig bearbeiteten Zahnersatz-Teil beispielsweise noch Stege, welche den Zahnersatz-Teil noch mit dem Befestigungsbereich verbinden, vorhanden sein, welche in einem letzten Schritt vom Zahnersatz-Teil entfernt werden.

Es ist aber auch möglich durch verschiedene Zwischenadapter den Rohling in verschieden einstellbaren Winkelmaßen zur Bearbeitungsgerät zu positionieren.

Durch eine Bearbeitung parallel zur Längsachse in Kombination mit der radialen Befestigung können am Befestigungsbereich jegliche Parallel- sowie Querbohrungen bis zu einem Winkel, der von dem Bearbeitungsgerät limitiert ist, am Rohling eingebracht werden. Im Gegensatz dazu sind bei Rohlingen, welche rechtwinklig zur Längsachse bearbeitet werden, die Winkel der Bohrungen mit 30° limitiert und es können keine formschlüssigen Verbindungen bearbeitet werden. Indem der Rohling nicht stirnseitig eingespannt wird, sondern radial am Befestigungsbereich, kann der Rohling an der Deckfläche von allen Seiten beliebig oft bearbeitet werden. Das heißt, das Bearbeitungsstück kann mehrmalig repositioniert werden, z.B. ein- und ausgespannt werden, und auch ein- oder mehrmalig, einzeln oder als Baugruppe in Verbindung mit anderen Elementen, wie z.B. einer Verschlussschraube, keramischer Verblendungen, Oberflächenbehandlungen, etc. bearbeitet werden.

Bei dem Bearbeitungsstück bzw. Rohling kann es sich auch um ein Halbzeug handeln. Im Folgenden werden die Begriffe Bearbeitungsstück und Rohling synonym verwendet.

Bei der Dentalrestauration, welche aus dem Rohling hergestellt werden kann, kann es sich um jedmögliche Art von Dentalrestauration und Struktur handeln. Durch die erfindungsgemäße Ausführung des Rohlings ist es möglich, jegliche Dentalrestauration aus diesem zu fertigen. Die Höhe des Befestigungsbereichs kann kleiner sein als die Höhe des Bearbeitungsbereichs oder aber auch gleich groß sein. Bei einer kleineren Höhe des Befestigungsbereichs muss bei der Bearbeitung nicht so viel Material abgetragen werden, wodurch die Bearbeitung schneller und effizienter durchgeführt werden kann.

Erfindungsgemäß weist der Befestigungsbereich zumindest eine seitliche Haltefläche auf, welche als Einbuchtung ausgebildet ist, auf welche im montierten Zustand Spannelemente des Halters drücken. Das heißt das dentale Bearbeitungsstück kann mithilfe des Befestigungsbereichs im Halter eingespannt werden. Die seitlichen Halteflächen geben dabei die Ausrichtung des Bearbeitungsstücks im Halter vor. Mithilfe der Spannelemente kann das Bearbeitungsstück auf sehr einfache Weise im Halter wiederholgenau und reproduzierbar montiert werden. Beispielsweise kann der Rohling mittels hochpräziser drei Punkt Spannelemente befestigt werden.

Erfindungsgemäß ist der Befestigungsbereich ringförmig um einen Abschnitt der Mantelfläche des Bearbeitungsstücks ausgebildet.

Dadurch lässt sich das Bearbeitungsstück sehr einfach am Halter befestigen, indem beispielsweise ein Haltering den Befestigungsbereich am Halter einspannt.

Außerdem kann das Bearbeitungsstück einen vorgefrästen, inneren Kanal aufweisen.

Erfindungsgemäß ist die Mantelfläche des Bearbeitungsbereichs und/oder die Oberfläche des Befestigungsbereichs zumindest teilweise kreiszylindermantelförmig ausgebildet, wobei der Manteldurchmesser des Befestigungsbereichs größer ist als der Manteldurchmesser des Bearbeitungsbereichs. Somit ist der Befestigungsbereich der breiteste Bereich des Bearbeitungsstück und dieses kann am Befestigungsbereich in einen Halter eingespannt werden. Durch den kreisförmigen Querschnitt kann einerseits das Bearbeitungsstück auf sehr einfache Weise z.B. mithilfe eines Halterings am Halter eingespannt werden und andererseits der Bearbeitungsbereich sehr flexibel bearbeitet werden, ohne, dass eine Grundform vorgegeben wird. Im Speziellen kann somit auch ein abgewinkeltes Abutment oder dergleichen hergestellt werden.

Besonders bevorzugt ist das Verhältnis des Manteldurchmessers des Befestigungsbereichs zum Manteldurchmesser des Bearbeitungsbereichs derart, dass einerseits der Manteldurchmesser des Bearbeitungsbereichs nicht zu groß ist, sodass sich die Zykluszeit bei der Bearbeitung nicht verlängert und eine Bearbeitung des Rohlings nicht effizient erfolgen kann, da vorerst eine große Menge an Material abgetragen werden muss. Andererseits muss der Manteldurchmesser des Bearbeitungsbereichs groß genug gewählt werden, dass eine Vielzahl von verschiedenen Dentalstrukturen darin Platz finden und aus dem Rohling gefertigt werden können. Der Durchmesser des Befestigungsbereichs muss dabei so groß gewählt werden, dass das größte verwendete Bearbeitungswerkzeug des Bearbeitungsgeräts noch ausreichend Platz zur Bearbeitung des Bearbeitungsbereichs hat. Bei einem zu kleinen Durchmesser würde das Bearbeitungswerkzeug eventuell nicht unterhalb des Befestigungsbereichs kommen, ohne den Befestigungsbereich zu entfernen.

Das dentale Bearbeitungsstück kann auch jegliche andere Zylinderform annehmen und eine polygonale Grundfläche aufweisen. Außerdem kann der Befestigungsbereich auch nur teilweise um den Bearbeitungsbereich angeordnet sein.

Erfindungsgemäß weist der Rohling an dem dem Befestigungsbereich zugewandten Ende, einen vorgefertigten Implantatanschluss zum Fixieren des Bearbeitungsstücks an einem Dentalimplantat auf.

Dadurch kann den Dentaltechnikern eine Arbeitserleichterung geboten werden. Der Implantatanschluss kann je nach Anwendungsgebiet und je nach verwendetem Zahnimplantattypus unterschiedliche Form aufweisen. Besonders bevorzugt befindet sich der Befestigungsbereich in Längsrichtung des Bearbeitungsstücks direkt oberhalb des Implantatanschlusses, das heißt oberhalb der Grundfläche des Bearbeitungsbereichs. Dabei kann der Befestigungsbereich sich über eine Höhe erstrecken, welche sich von der Grundfläche des Bearbeitungsbereichs bis höchstens zur Hälfte der Höhe des Bearbeitungsbereichs erstreckt. Damit kann das dentale Bearbeitungsstück von der Deckfläche aus, das heißt von der dem Implantatanschluss gegenüberliegenden Seite, von einem Bearbeitungsgerät sehr flexibel und von allen Seiten bearbeitet werden.

Besonders bevorzugt weist das Bearbeitungsstück entlang der Längsachse eine Bearbeitungsstücklänge auf, welche sich über die gesamte Länge des Bearbeitungsstücks erstreckt. Das heißt die Höhe des Bearbeitungsbereichs entspricht der gesamten Länge des Bearbeitungsstücks. Eine Bearbeitung entlang des gesamten Bearbeitungsstücks ist aufgrund der parallel zur Längsachse durchgeführten Bearbeitung des Bearbeitungsstücks möglich. Durch die Befestigung des Bearbeitungsstücks im Halter am Befestigungsbereich, welcher radial um die Längsachse angeordnet ist, kann auch der Bereich unterhalb des Befestigungsbereichs bearbeitet werden. Trotzdem wird eine präzise und genau ausgerichtete Fixierung des Bearbeitungsstücks im Bearbeitungsgerät garantiert.

Außerdem kann vorgesehen sein, dass der Befestigungsbereich und der Bearbeitungsbereich des Bearbeitungsstücks einstückig ausgeführt sind. Dadurch bildet das Bearbeitungsstück nur einen einzelnen Block, welcher aus einem Material besteht.

Bevorzugt ist das Bearbeitungsstück aus einer Dentallegierung wie z.B. einer Titanlegierung oder einer Kobalt-Chrom-Legierung gefertigt.

Außerdem betrifft die Erfindung ein Set mit zumindest einem Bearbeitungsstück nach Anspruch 1 oder 2 und einem Halter zum Halten des Bearbeitungsstücks, mit einem Haltebereich für das dentale Bearbeitungsstück bzw. den Rohling, wobei im Haltebereich eine Spannvorrichtung ausgebildet ist, wobei im am Halter montierten Zustand des Bearbeitungsstücks die Spannvorrichtung einen am Bearbeitungsstück radial um dessen Längsachse ausgebildeten Befestigungsbereich umspannt.

Bevorzugt umfasst die Spannvorrichtung zumindest ein Spannelement. Mithilfe des Spannelements kann der radial um einen Bereich des Rohlings ausgebildete Befestigungsbereich im Halter eingespannt werden. Hierfür greift im am Halter montierten Zustand des Bearbeitungsstücks das Spannelement in eine seitliche Haltefläche am Befestigungsbereich ein.

Besonders bevorzugt umfasst die Spannvorrichtung einen Haltering, wobei der Haltering im am Halter montierten Zustand des Bearbeitungsstücks den Befestigungsbereich einspannt. Mithilfe des Halterings lässt sich das Bearbeitungsstück auf sehr einfache Weise am Halter präzise und vibrationsarm fixieren.

Außerdem kann die Spannvorrichtung ein zumindest in zwei Achsen bewegliches Spannelement umfassen.

In einer weiteren Ausführungsvariante weist der Halter zumindest zwei Haltebereiche zum Halten jeweils eines dentalen Bearbeitungsstückes auf.

Außerdem betrifft die Erfindung ein dentales Bearbeitungsgerät mit einem Gehäuse, zumindest einem mit dem Gehäuse, insbesondere bewegbar, verbundenen erfindungsgemäßen Halter, zumindest einem, im Halter befestigbaren bzw. befestigten erfindungsgemäßen dentalem Bearbeitungsstück und zumindest einem Bearbeitungskopf, insbesondere Fräser, Schleifer oder Ähnliches, zum Bearbeiten des Bearbeitungsstücks.

Des Weiteren kann das Bearbeitungsgerät eine Kalibriervorrichtung aufweisen, wobei von der Kalibriervorrichtung die Position des zumindest einen Bearbeitungsstücks relativ zum Halter ermittelbar ist.

Bevorzugt umfasst das Bearbeitungsgerät eine Steuer- oder Regeleinheit, durch die der Bearbeitungskopf, eine Bewegung des Halters und/oder die Kalibriervorrichtung steuer- oder regelbar sind/ist.

### AUSFÜHRLICHE BESCHREIBUNG DER ERFINDUNG

Weitere Vorteile und Details der Erfindung werden nachfolgend anhand der folgenden Figuren und Figurenbeschreibungen erläutert.

Dabei zeigt:
- Fig. 1a bis 1g: diverse Ansichten eines Bearbeitungsstücks,
- Fig. 2a bis 2d: diverse Ansichten eines Halters samt Bearbeitungsstücken,
- Fig. 3: einen Ausschnitt aus einem dentalen Bearbeitungsgerät samt eingebrachten Halter und Bearbeitungsstücken,
- Fig. 4a bis 4b: ein Bearbeitungsstück in Form einer dentalen Konstruktion.

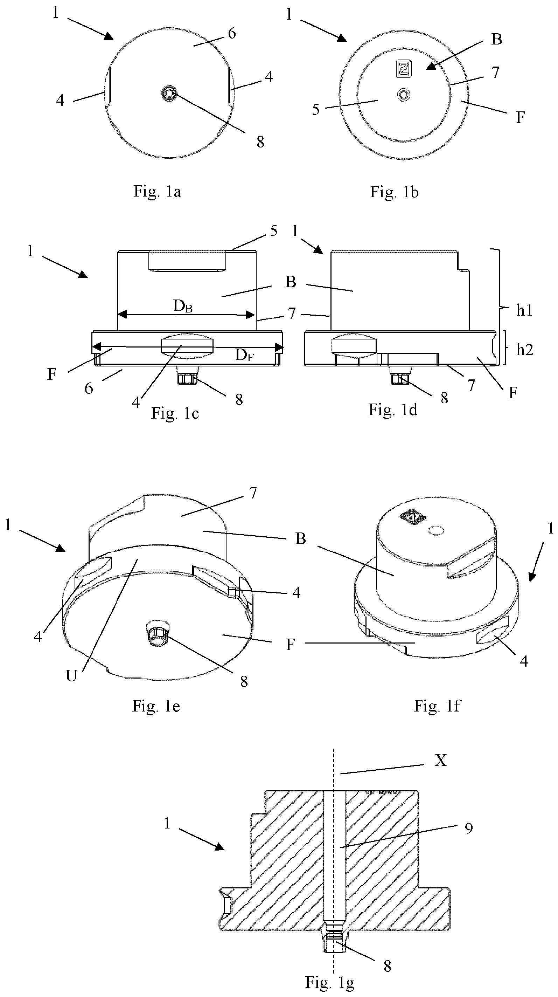

In den Fig. 1a bis 1g ist ein dentales Bearbeitungsstück 1 bzw. einen Rohling in Form eines Abutments von unten (Fig. 1a), von oben (Fig. 1b), von der Seite (Fig. 1c und 1d), in perspektivischer Ansicht (Fig. 1e und 1f) und in einer Schnittdarstellung (Fig. 1g) dargestellt.

Das dentale Bearbeitungsstück 1 umfasst wie in den Fig. 1a bis 1g ersichtlich einen Bearbeitungsbereich B, der von einem dentalen Bearbeitungsgerät 2 bearbeitbar ist, und der einen zylindrischen Grundkörper mit einer Deckfläche 5, einer Grundfläche 6 und einer Mantelfläche 7 aufweist. Zudem umfasst das Bearbeitungsstück 1 einen Befestigungsbereich F zur Befestigung des Bearbeitungsstücks 1 an einem Halter 3 des Bearbeitungsgeräts 2. Der Befestigungsbereich F ist dabei um den zylindrischen Grundkörper des Bearbeitungsbereichs B derart angeordnet, dass die Höhe h2 des Befestigungsbereichs F kleiner ist als die Höhe h1 des Bearbeitungsbereich B. Mithilfe des Befestigungsbereichs F ist das Bearbeitungsstück 1 so im Halter 3 montierbar, dass es im montierten Zustand parallel zur Längsachse X bearbeitbar ist.

Bevorzugt ist das dentale Bearbeitungsstück aus einer Dentallegierung wie z.B. Titanlegierungen oder einer Kobalt-Chrom-Legierung gefertigt.

Außerdem kann der Befestigungsbereich B zumindest eine seitliche Haltefläche 4 aufweisen, welche als Einbuchtungen ausgeführt sind, auf welche im montierten Zustand Spannelemente 4' des Halters 3 drücken. In diese seitlichen Halteflächen 4 können die Spannelemente 4' eingreifen und somit verhindern, dass sich das Bearbeitungsstück 1 im Halter 3 bewegt.

Bevorzugt sind die seitlichen Halteflächen 4 wie in den Figuren 1a - 1g dargestellt als Einbuchtungen ausgeführt.

Wie in der Fig. 1e ersichtlich ist der Großteil der Außenkontur des dentalen Bearbeitungsstücks 1 bevorzugt rotationssymmetrisch um die Längsachse X ausgebildet. Nur die seitlichen Halteflächen 4 sowie eventuell der Implantatanschluss 8 sind nicht rotationssymmetrisch ausgebildet.

Der Implantatanschluss 8 befindet sich wie in den Fig. 1c und 1d ersichtlich vorzugsweise an dem dem Befestigungsbereich F zugewandten Ende des Bearbeitungsstücks 1 bzw. an der Grundfläche 6 des Bearbeitungsbereichs B und dient dem Fixieren des Bearbeitungsstücks 1 an einem Dentalimplantat. Das dentale Bearbeitungsstück 1 kann somit bereits mit einem vorgefertigten Implantatanschluss 8 zur Verfügung gestellt werden, welcher je nach verwendetem Zahnimplantattypus auch variieren kann.

Des Weiteren kann der Befestigungsbereich B wie in den Fig. 1a - 1g dargestellt ringförmig um das Bearbeitungsstück 1 ausgebildet sein. Dadurch lässt sich das dentale Bearbeitungsstück 1 fest im Halter 3 einspannen und ein Verrutschen des Bearbeitungsstücks 1 während der Bearbeitung kann vermieden werden.

In einer weiteren Ausführungsvariante kann das Bearbeitungsstück 1 einen vorgefrästen, inneren Kanal 9 aufweisen. Außerdem kann das Bearbeitungsstück 1 auch mehrere vorgefräste, innere Kanäle 9 aufweisen.

Bevorzug ist die Mantelfläche 7 des Bearbeitungsbereichs B und/oder die Oberfläche U des Befestigungsbereichs F zumindest teilweise kreiszylindermantelförmig ausgebildet wie in den Figuren dargestellt. Der Befestigungsbereich F weicht an den Stellen, an welchen sich seitliche Halteflächen 4 an der Mantelfläche des Befestigungsbereichs F befinden, von der Kreiszylinderform ab. Die seitlichen Halteflächen 4 können dabei Einbuchtungen an der Mantelfläche bilden. Der Manteldurchmesser D_{F} des Befestigungsbereichs F ist dabei größer als der Manteldurchmesser D_{B} des Bearbeitungsbereichs B. Dadurch wird wiederum definiert, dass sich der Befestigungsbereich F radial entlang eines Abschnitts der Längsachse X des Bearbeitungsstücks 1 um den Bearbeitungsbereich B erstreckt.

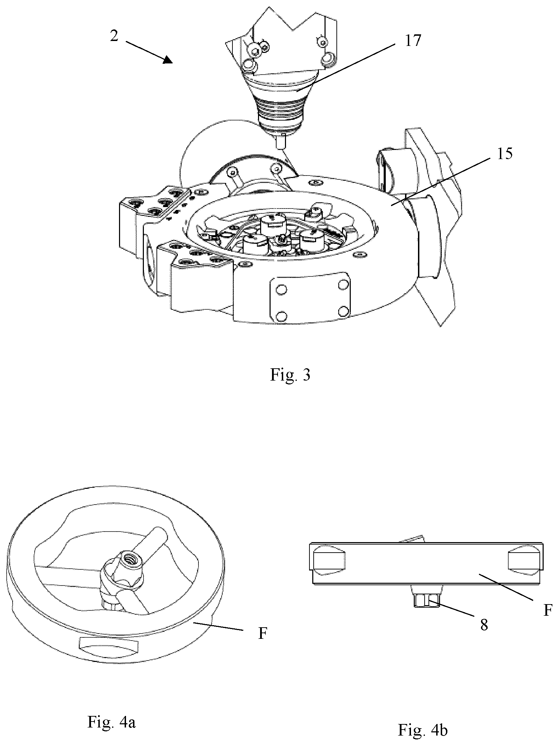

Besonders bevorzugt weist das Bearbeitungsstück 1 entlang der Längsachse X eine Bearbeitungsstücklänge auf, welche sich über die gesamte Länge des Bearbeitungsstücks 1 erstreckt. Das heißt das aus dem Bearbeitungsstück 1 schlussendlich mithilfe eines Bearbeitungsgeräts 2 gefertigte Dentalelement, z.B. Abutment, kann als maximale Länge die Gesamtlänge des Bearbeitungsstücks 1 aufweisen. Die Höhe des Bearbeitungsbereichs B entspricht somit der Länge des Bearbeitungsstücks 1. Für kleinere Dentalelemente wird das Bearbeitungsstück 1 gekürzt, indem der Bereich unterhalb der Deckfläche 5 des Bearbeitungsbereichs B mithilfe des Bearbeitungsgeräts 2 entfernt bzw. weggefräst wird. Ein Beispiel für ein aus dem Bearbeitungsstück 2 gefertigtes Dentalelement ist in den Fig. 4a und 4b dargestellt. In diesem Beispiel ist ein abgewinkeltes Abutment dargestellt, in welches ein abgewinkeltes Gewinde gefräst wurde. Dies ist aufgrund der Bearbeitung des Bearbeitungsstücks 1 entlang der Längsachse X im Bearbeitungsgerät 2 möglich. Zudem ist in Fig. 4a und 4b ersichtlich, dass ein erheblicher Bereich des Bearbeitungsbereichs B zur Fertigung des Abutments entfernt wurde. Außerdem ist das Abutment noch mit dem Befestigungsbereich F über die dargestellten Stege verbunden, welche auf einfache Weise vom Abutment abgetrennt werden können.

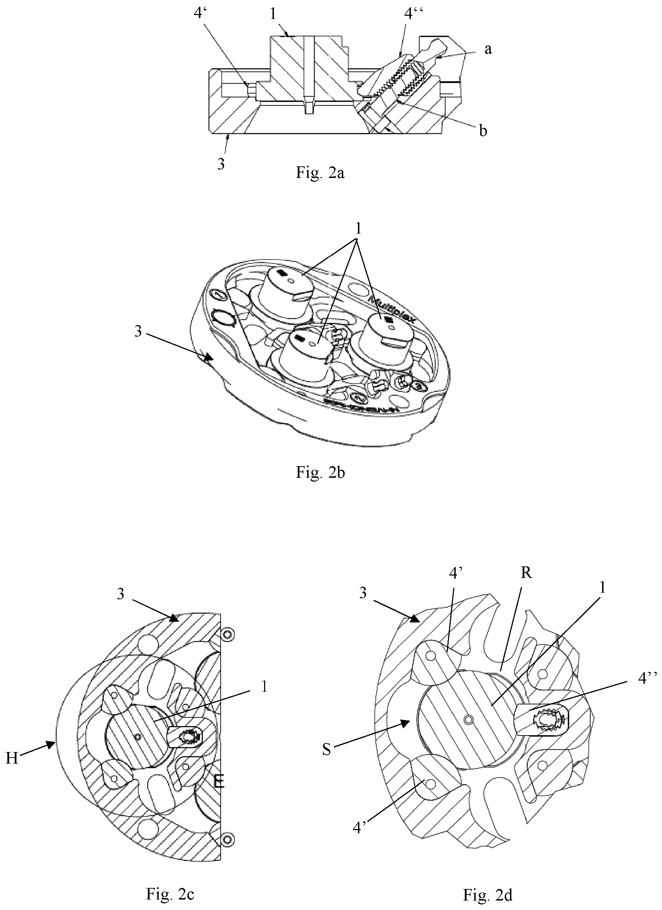

In den Fig. 2a und 2b ist ein erfindungsgemäßer Halter 3 bzw. sind Detailausschnitte des Halters 3 in den Fig. 2c und 2d dargestellt. Der Halter 3 ermöglicht das Halten eines dentalen Bearbeitungsstücks 1, indem er einen Haltebereich H für das dentale Bearbeitungsstück 1 aufweist. Im Haltebereich H ist eine Spannvorrichtung S ausgebildet, an welcher der Befestigungsbereich F des Bearbeitungsstücks 1 eingespannt werden kann.

Bevorzugt umfasst die Spannvorrichtung S zumindest ein Spannelement 4'. Das Spannelement 4' bildet das Gegenstück zu einer am Befestigungsbereich F ausgebildeten seitlichen Haltefläche 4, und können in die Halteflächen 4 eingreifen und damit das Bearbeitungsstück 1 im Halter 3 positionieren.

Besonders bevorzugt umfasst die Spannvorrichtung S außerdem einen Haltering R. Der Haltering R ermöglicht es das Bearbeitungsstück 1 durch Einspannen des Befestigungsbereichs F präzise und vibrationsarm zu spannen. Weiters kann die Spannvorrichtung S zumindest ein in zwei Achsen bewegliches Spannelement 4" umfassten. Dadurch lässt sich das Bearbeitungsstück 1 noch präziser am Halter 3 einspannen. Außerdem lässt sich somit das Bearbeitungsstück 1 auch reproduzierbar einspannen, das heißt, auch wenn das Bearbeitungsstück 1 während der Bearbeitung im Bearbeitungsgerät 2 aus dem Halter 3 entfernt wird und danach zur weiteren Bearbeitung wieder in diesen eingebracht wird, kann mithilfe des beweglichen Spannelements 4" und den seitlichen Halteflächen 4 das Bearbeitungsstück 1 wieder in der exakt gleichen Position am Halter 3 fixiert werden, um eine weitere Bearbeitung zu ermöglichen. Der erfindungsgemäße Spannmechanismus, welcher durch die Spannvorrichtung S ermöglicht wird, erlaubt somit eine klar definierte Einspannung der Rohlinge 1 mit höchster Einspann- und Wiederholgenauigkeit. Somit können die Bearbeitungsstücke 1 auch mehrmals, um eventuelle Nacharbeiten zu tätigen, ein- und ausgespannt werden. Außerdem ermöglicht die Spannvorrichtung S einen sehr einfachen und sicher bedienbaren Spannmechanismus.

In den in den Fig. 2a - 2d gezeigten Ausführungsvarianten des Halters 3 weist der Haltebereich H eine Spannvorrichtung S mit zwei Spannelementen 4' und einem beweglichen Spannelement 4" sowie einem Haltering R auf. Dadurch ergibt sich ein drei-Punkt Spannsystem, mittels welchem der Befestigungsbereich F des Bearbeitungsstücks 1 sehr präzise und vibrationsarm am Halter 3 eingespannt werden kann. Durch die am Befestigungsbereich F ausgebildeten seitlichen Halteflächen 4 lässt sich das Bearbeitungsstück 1 auf sehr einfache Weise im Halter 3 ausrichten. Wie in Fig. 2a dargestellt kann das bewegliche Spannelement 4" zwei Schrauben a und b umfassen, wobei eine erste Schraube a bevorzugt ein Innen- und ein Außengewinde umfasst, wobei eine zweite Schraube b bevorzugt ein Außengewinde umfasst, welches in das Innengewinde der ersten Schraube a eingreift. Durch Drehen an der ersten Schraube a kann der Rohling 1 am Halter 3 eingespannt werden, wobei sich der Rohling 1 dabei nur entlang einer Achse, welche senkrecht zur Längsachse X ist, bewegt. Durch Vermeidung der Bewegung in eine andere Achse wird das Risiko einer Verspannung reduziert. Das bewegliche Spannelement 4" kann jedoch auch andere Ausführungsformen aufweisen.

Bevorzugt weist der Halter 3 mehr als einen Haltebereich H zum Halten eines dentalen Bearbeitungsstücks 1 auf. Der Halter 3 aus Fig. 2b weist beispielsweise drei Haltebereiche H auf und es können daher gleichzeitig drei Bearbeitungsstücke 1 im Halter 3 eingespannt werden und nach Einbringung des Halters 3 in das Bearbeitungsgerät 2 nacheinander in diesem Bearbeitet werden, ohne dazwischen jeweils ein neues Bearbeitungsstück 1 im Halter 3 einspannen zu müssen.

Fig. 3 zeigt noch einen Ausschnitt eines dentalen Bearbeitungsgeräts 2 mit einem Gehäuse 15, in welches ein Halter 3 eingebracht ist. Das Bearbeitungsgerät 2 weist einen Bearbeitungskopf 17 auf, bei welchem es sich um einen Fräser, Schleifer oder Ähnliches handeln kann. Bevorzugt wird der Halter 3 wie in Fig. 3 dargestellt an einem Werkstück-Aufnahmering des Bearbeitungsgeräts 2 eingelegt und liegt dort vorzugsweise an einem Anschlag an. Der Anschlag kann kreisförmig ausgebildet sein. Weiters kann der Halter 3 mittels Spannelementen und/oder Befestigungselementen wie z.B. Schrauben parallel zur Bearbeitungsachse, das heißt zur Längsachse X des Rohlings 1, am Werkstück-Aufnahmering festgeklemmt werden.

In einer bevorzugten Ausführungsvariante weist das Bearbeitungsgerät 2 eine Kalibriervorrichtung 18 auf, mit welcher die Position des zumindest einen Bearbeitungsstücks 1 relativ zum Halter 3 ermittelt werden kann. Vorzugsweise umfasst die Kalibriervorrichtung 18 einen 3D Kalibriertaster, mit welchem die Position der dentalen Bearbeitungsstücke 1 nach dem Einspannen im Halter 3 genau vermessen werden können. Mit einem 3D Kalibriertaster kann die Lage des Bearbeitungsstücks 1 in allen Achsen bestimmt werden und bei der Bearbeitung mittels Bearbeitungskopf 17 kann die Lage miteinbezogen werden und eventuelle Abweichungen von der berechneten Lage miteinbezogen werden und kompensiert werden.

Besonders bevorzugt umfasst das Bearbeitungsgerät 2 auch eine Steuer- oder Regeleinheit, mit welcher der Bearbeitungskopf 17, eine Bewegung des Halters 3 und/oder die Kalibriervorrichtung 18 steuer- oder regelbar sind/ist. Mit dieser Steuer- oder Regeleinheit lassen sich auch eventuelle Fehlpositionen des Bearbeitungsstücks 1, welche anhand der Kalibriervorrichtung 18 ermittelbar sind, wie oben beschrieben kompensieren, indem der Bearbeitungskopf 17 an die neue Position angepasst gesteuert wird. Die Kalibriervorrichtung 18 übermittelt somit die Position des Bearbeitungsstücks 1 an die Steuer- oder Regeleinheit. Die von der Kalibriervorrichtung 18 erfassten Werte werden in der Software der Steuer- oder Regeleinheit hinterlegt, um spätere Berechnungen oder bereits erfolgte Berechnungen auf dieser Grundlage durchführen bzw. anpassen zu können.

## Patentansprüche

1. Dentales Bearbeitungsstück (1) bzw. Rohling zur Herstellung einer Dentalrestauration insbesondere Abutment, Krone, Brücke oder Schnappverbindung, mit
- einem Bearbeitungsbereich (B), der von einem dentalen Bearbeitungsgerät (2) bearbeitbar ist, und der einen zylindrischen Grundkörper mit einer Längsachse (X), einer Deckfläche (5), einer Grundfläche (6) und einer Mantelfläche (7) aufweist, und
- einem Befestigungsbereich (F) zur Befestigung des Bearbeitungsstücks (1) an einem Halter (3) des Bearbeitungsgeräts (2),
wobei der Befestigungsbereich (F) radial um den zylindrischen Grundkörper des Bearbeitungsbereichs (B) angeordnet ist, wobei der Befestigungsbereich (B) zumindest eine seitliche Haltefläche (4) aufweist, welche als Einbuchtung ausgebildet ist, auf welche im montierten Zustand Spannelemente (4') des Halters (3) drücken,
wobei der Befestigungsbereich (B) ringförmig um einen Abschnitt der Mantelfläche (7) des Bearbeitungsstücks (1) ausgebildet ist,
wobei die Mantelfläche (7) des Bearbeitungsbereichs (B) und/oder die Oberfläche (U) des Befestigungsbereichs (F) zumindest teilweise kreiszylindermantelförmig ausgebildet ist, wobei der Manteldurchmesser (D_{F}) des Befestigungsbereichs (F) größer ist als der Manteldurchmesser (D_{B}) des Bearbeitungsbereichs (B),
**dadurch gekennzeichnet, dass**
das Bearbeitungsstück (1) an dem dem Befestigungsbereich (F) zugewandten Ende einen vorgefertigten Implantatanschluss (8) zum Fixieren des Bearbeitungsstücks (1) an einem Dentalimplantat aufweist.

2. Bearbeitungsstück nach Anspruch 1, **dadurch gekennzeichnet, dass** das Bearbeitungsstück (1) entlang der Längsachse (X) eine Bearbeitungsstücklänge aufweist, welche sich über die gesamte Länge des Bearbeitungsstücks (1) erstreckt.

3. Set mit zumindest einem Bearbeitungsstück (1) nach einem der Ansprüche 1 oder 2 und einem Halter (3) zum Halten des dentalen Bearbeitungsstücks (1) mit einem Haltebereich (H) für das dentale Bearbeitungsstück (1), wobei im Haltebereich (H) eine Spannvorrichtung (S) ausgebildet ist, wobei im am Halter (3) montierten Zustand des Bearbeitungsstücks (1) die Spannvorrichtung (S) einen am Bearbeitungsstück (1) radial um dessen Längsachse (X) ausgebildeten Befestigungsbereich (F) umspannt, wobei die Spannvorrichtung (S) ein drei-Punkt Spannsystem umfassend zumindest zwei Spannelemente (4'), zumindest ein bewegliches Spannelement (4") und einen Haltering (R) bildet, wobei im am Halter (3) montierten Zustand des Bearbeitungsstücks (1) die zwei Spannelemente (4') sowie das bewegliche Spannelement (4") jeweils in eine seitliche Haltefläche (4) am Befestigungsbereich (F) eingreifen, wobei der Haltering (R) im am Halter (3) montierten Zustand des Bearbeitungsstücks (1) den Befestigungsbereich (F) einspannt, wobei das Bearbeitungsstück (1) mithilfe des Befestigungsbereichs (F) so im Halter (3) montierbar ist, dass es im montierten Zustand parallel zur Längsachse (X) bearbeitbar ist.

4. Set nach Anspruch 3, **dadurch gekennzeichnet, dass** die Spannvorrichtung (S) zumindest ein Spannelement (4') umfasst, wobei im am Halter (3) montierten Zustand des Bearbeitungsstücks (1) das Spannelement (4') in eine seitliche Haltefläche (4) am Befestigungsbereich (B) eingreift.

5. Set nach Anspruch 3 oder 4, **dadurch gekennzeichnet, dass** die Spannvorrichtung (S) einen Haltering (R) umfasst, wobei der Haltering (R) im am Halter (3) montierten Zustand des Bearbeitungsstücks (1) den Befestigungsbereich (F) einspannt.

6. Set nach einem der Ansprüche 3 bis 5, **dadurch gekennzeichnet, dass** die Spannvorrichtung (S) zumindest ein in zwei Achsen bewegliches Spannelement (4") umfasst, wobei im am Halter (3) montierten Zustand des Bearbeitungsstücks (1) das bewegliche Spannelement (4") in eine seitliche Haltefläche (4) am Befestigungsbereich (B) eingreift.

7. Set nach einem der Ansprüche 3 bis 6, **dadurch gekennzeichnet, dass** der Halter (3) zumindest zwei Haltebereiche (H) zum Halten jeweils eines dentalen Bearbeitungsstückes (1) aufweist.

8. Dentales Bearbeitungsgerät (2) mit
- einem Gehäuse (15),
- zumindest einem mit dem Gehäuse (15), insbesondere bewegbar, verbundenen Halter (3),
- zumindest einem, im Halter (3) befestigbaren bzw. befestigten dentalem Bearbeitungsstück (1) und
- zumindest einem Bearbeitungskopf (17), insbesondere Fräser, Schleifer oder Ähnliches, zum Bearbeiten des Bearbeitungsstücks (1), wobei der Halter (3) und das Bearbeitungsstück (1) gemäß dem Set nach einem der Ansprüche 3 bis 7 ausgebildet sind.

9. Bearbeitungsgerät nach Anspruch 8, **gekennzeichnet durch** eine Kalibriervorrichtung (18), wobei von der Kalibriervorrichtung (18) die Position des zumindest einen Bearbeitungsstücks (1) relativ zum Halter (3) ermittelbar ist.

10. Bearbeitungsgerät Anspruch 8 oder Anspruch 9, **gekennzeichnet durch** eine Steuer- oder Regeleinheit, durch die der Bearbeitungskopf (17), eine Bewegung des Halters (3) und/oder die Kalibriervorrichtung (18) steuer- oder regelbar sind/ist.

11. Verfahren zum Bearbeiten eines dentalen Bearbeitungsstücks (1) bzw. Rohlings nach Anspruch 1 oder 2 zur
Herstellung einer Dentalrestauration insbesondere Abutment, Krone, Brücke oder Schnappverbindung, wobei das Bearbeitungsstück (1) einen Bearbeitungsbereich (B) und einen einen Befestigungsbereich (F) aufweist,
wobei das Bearbeitungsstück (1) einen zylindrischen Grundkörper mit einer Längsachse (X), einer Deckfläche (5), einer Grundfläche (6) und einer Mantelfläche (7) aufweist, wobei der Befestigungsbereich (F) radial um den zylindrischen Grundkörper des Bearbeitungsbereichs (B) angeordnet ist,
wobei das Bearbeitungsstück (1) an dem dem Befestigungsbereich (F) zugewandten Ende einen vorgefertigten Implantatanschluss (8) zum Fixieren des Bearbeitungsstücks (1) an einem Dentalimplantat aufweist,
wobei das Bearbeitungsstück (1) mit dem Befestigungsbereich (F) an einem Halter (3) eines Bearbeitungsgeräts (2) befestigt wird und wobei der Bearbeitungsbereich (B) vom Bearbeitungsgerät (2) bearbeitet wird,
wobei das Bearbeitungsstück (1) vom Bearbeitungsgerät parallel zur Längsachse (X) des Bearbeitungsstücks (1) bearbeitet wird, auch unterhalb des Befestigungsbereichs, und wobei der Bearbeitungsbereich stirnseitig bearbeitet wird.

## Claims

1. A dental processing piece (1) or blank for producing a dental restoration, in particular an abutment, crown, bridge or snap-on connection, with
- a processing area (B), which may be processed by a dental processing device (2) and which has a cylindrical base body having a longitudinal axis (X), a top surface (5), a base surface (6) and a lateral surface (7), and
- a fastening area (F) for fastening the processing piece (1) to a holder (3) of the processing device (2),
wherein the fastening area (F) is arranged radially around the cylindrical base body of the processing area (B),
wherein the fastening area (B) has at least one lateral holding surface (4), which is configured as an indentation, on which clamping elements (4') of the holder (3) press in the mounted state,
wherein the fastening area (B) is formed in an annular shape around a section of the lateral surface (7) of the processing piece (1),
wherein the lateral surface (7) of the processing area (B) and/or the surface (U) of the fastening area (F) is configured to be at least partially circular-cylindrical in shape, wherein the lateral diameter (D_{F}) of the fastening area (F) is larger than the lateral diameter (D_{B}) of the processing area (B), **characterized in that**
the processing piece (1) has a prefabricated implant connection (8) at the end facing the fastening area (F) for fixing the processing piece (1) to a dental implant.

2. A dental processing piece according to claim 1, **characterized in that** the processing piece (1) has a processing piece length along the longitudinal axis (X), which extends across the entire length of the processing piece (1).

3. A set with at least one processing piece (1) according to any of claims 1 or 2 and a holder (3) for holding the dental processing piece (1) with a holding area (H) for the dental processing piece (1), wherein there is formed a clamping device (S) in the holding area (H), wherein the clamping device (S) clamps around a fastening area (F) formed on the processing piece (1) radially around the longitudinal axis (X) thereof in the state of the processing piece (1) being mounted on the holder (3),
wherein the clamping device (S) forms a three-point clamping system comprising at least two clamping elements (4'), at least one movable clamping element (4") and a holding ring (R), wherein the two clamping elements (4') as well as the movable clamping element (4") each engage in a lateral holding surface (4) on the fastening area (F) in the state of the processing piece (1) being mounted on the holder (3), wherein the holding ring (R) clamps the fastening area (F) in the state of the processing piece (1) being mounted on the holder (3),
wherein the processing piece (1) may be mounted in the holder (3) with the aid of the fastening area (F) in such a way that it may be processed in parallel to the longitudinal axis (X) in the mounted state.

4. Set according to claim 3, **characterized in that** the clamping device (S) comprises at least one clamping element (4'), wherein the clamping element (4') engages in a lateral holding surface (4) on the fastening area (B) in the state of the processing piece (1) being mounted on the holder (3).

5. Set according to claim 3 or claim 4, **characterized in that** the clamping device (S) comprises a holding ring (R), wherein the holding ring (R) clamps the fastening area (F) in the state of the processing piece (1) being mounted on the holder (3).

6. Set according to one of claims 3 to 5, **characterised in that** the clamping device (S) comprises at least one clamping element (4") movable in two axes, wherein the movable clamping element (4") engages in a lateral holding surface (4) on the fastening area (B) in the state of the processing piece (1) being mounted on the holder (3).

7. Set according to one of claims 3 to 6, **characterized in that** the holder (3) has at least two holding areas (H) for respectively holding a dental processing piece (1).

8. A dental processing device (2) with
- a housing (15),
- at least one holder (3) connected - in particular movably connected - to the housing (15),
- at least one dental processing piece (1) being connectable or being connected to the holder (3),
- at least one processing head (17), in particular a milling cutter, grinder or the like, for processing the processing piece (1),
wherein the holder (3) and the processing piece (1) are designed according to the set of one of claims 3 to 7.

9. A processing device according to claim 8, **characterized by** a calibration device (18), wherein the position of the at least one processing piece (1) relative to the holder (3) may be determined by the calibration device (18).

10. A processing device according to claim 8 or claim 9, **characterized by** a control or regulating unit, by means of which the processing head (17), a movement of the holder (3) and/or the calibration device (18) may be controlled or regulated.

11. Method of processing a dental processing piece (1) or blank according to claim 1 or claim 2, for producing a dental restoration, in particular an abutment, crown, bridge or snap-on connection, wherein the processing piece (1) has a processing area (B) and a fastening area (F),
wherein the processing piece (1) has a cylindrical base body having a longitudinal axis (X), a top surface (5), a base surface (6) and a lateral surface (7),
wherein the fastening area (F) is arranged radially around the cylindrical base body of the processing area (B),
wherein the processing piece (1) has a prefabricated implant connection (8) at the end facing the fastening area (F) for fixing the processing piece (1) to a dental implant wherein the processing piece (1) is fixed with the fastening area (F) to a holder (3) of a processing device (2) and wherein the processing area (B) is processed by the processing device (2),
wherein the processing piece (1) is processed by the processing device (2) parallel to the longitudinal axis (X) of the processing piece (1) also below the fastening area, and wherein the processing area is processed on the face.

## Revendications

1. Pièce de traitement dentaire (1) ou pièce brute pour la fabrication d'une restauration dentaire, notamment un pilier, une couronne, un bridge ou un assemblage à encliquetage, comprenant:
- une zone de traitement (B) pouvant être traitée par un dispositif de traitement dentaire (2), et présentant un corps de base cylindrique ayant un axe longitudinal (X), une surface de recouvrement (5), une surface de base (6) et une surface latérale (7), et
- une zone de fixation (F) pour la fixation de la pièce de traitement (1) à un support (3) du dispositif de traitement (2),
la zone de fixation (F) étant disposée radialement autour du corps de base cylindrique de la zone de traitement (B),
la zone de fixation (B) présentant au moins une surface de support latérale (4) conçue comme une encoche sur laquelle s'appuient des éléments de serrage (4') du support (3) dans l'état monté,
la zone de fixation (B) étant formée annulairement autour d'une section de la surface latérale (7) de la pièce de traitement (1),
la surface latérale (7) de la zone de traitement (B) et/ou la surface (U) de la zone de fixation (F) étant au moins partiellement conçues sous la forme d'une enveloppe de cylindre circulaire, le diamètre de l'enveloppe (D_{F}) de la zone de fixation (F) étant supérieur au diamètre de l'enveloppe (D_{B}) de la zone de traitement (B),
**caractérisée en ce que** la pièce de traitement (1) comporte une connexion d'implant préfabriquée (8) à l'extrémité faisant face à la zone de fixation (F) pour fixer la pièce de traitement (1) à un implant dentaire.

2. Pièce de traitement selon la revendication 1, **caractérisée en ce que** la pièce de traitement (1) présente une longueur de pièce de traitement le long de l'axe longitudinal (X) qui s'étend sur toute la longueur de la pièce de traitement (1).

3. Ensemble comprenant au moins une pièce de traitement (1) selon l'une des revendications 1 ou 2 et un support (3) pour supporter la pièce de traitement dentaire (1) comportant une zone de support (H) pour la pièce de traitement dentaire (1), un dispositif de serrage (S) étant conçu dans la zone de support (H), dans lequel, lorsque la pièce de traitement (1) est montée sur le support (3), le dispositif de serrage (S) enserre une zone de fixation (F) formée sur la pièce de traitement (1) radialement autour de l'axe longitudinal (X) de celle-ci, le dispositif de serrage (S) formant un système de serrage à trois points comprenant au moins deux éléments de serrage (4'), au moins un élément de serrage mobile (4") et une bague de support (R), dans lequel, lorsque la pièce de traitement (1) est montée sur le support (3), les deux éléments de serrage (4') et l'élément de serrage mobile (4") s'engagent chacun dans une surface de support latérale (4) sur la zone de fixation (F), dans lequel, lorsque la pièce de traitement (1) est montée sur le support (3), la bague de support (R) serre la zone de fixation (F), la pièce de traitement (1) étant montable dans le support (3) à l'aide de la zone de fixation (F) de manière à ce qu'elle puisse être traitée parallèlement à l'axe longitudinal (X) dans l'état monté.

4. Ensemble selon la revendication 3, **caractérisé en ce que** le dispositif de serrage (S) comprend au moins un élément de serrage (4'), dans lequel, lorsque la pièce de traitement (1) est montée sur le support (3), l'élément de serrage (4') s'engage dans une surface de support latérale (4) sur la zone de fixation (B).

5. Ensemble selon la revendication 3 ou 4, **caractérisé en ce que** le dispositif de serrage (S) comprend un bague de support (R), dans lequel, lorsque la pièce de traitement (1) est montée sur le support (3), la bague de support (R) serre la zone de fixation (F).

6. Ensemble selon l'une des revendications 3 à 5, **caractérisé en ce que** le dispositif de serrage (S) comprend au moins un élément de serrage (4") mobile sur deux axes, dans lequel, lorsque la pièce de traitement (1) est montée sur le support (3), l'élément de serrage mobile (4") s'engage dans une surface de support latérale (4) sur la zone de fixation (B).

7. Ensemble selon l'une des revendications 3 à 6, **caractérisé en ce que** le support (3) comporte au moins deux zones de support (H) pour supporter une pièce de traitement dentaire (1) à la fois.

8. Dispositif de traitement dentaire (2) comprenant:
- un boîtier (15),
- au moins un support (3) relié au boîtier (15), notamment de manière mobile,
- au moins une pièce de traitement dentaire (1) pouvant être fixée ou étant fixée au support (3), et
- au moins une tête de traitement (17), en particulier une fraise, une meuleuse ou similaire, pour le traitement de la pièce de traitement (1), le support (3) et la pièce de traitement (1) étant conçus conformément à l'ensemble selon l'une des revendications 3 à 7.

9. Dispositif de traitement selon la revendication 8, **caractérisé par** un dispositif de calibration (18), la position d'au moins une pièce de traitement (1) par rapport au support (3) pouvant être déterminée par le dispositif de calibration (18).

10. Dispositif de traitement selon la revendication 8 ou selon la revendication 9, **caractérisé par** une unité de commande ou de contrôle, par laquelle la tête de traitement (17), un déplacement du support (3) et/ou le dispositif de calibration (18) est/sont contrôlable(s) ou réglable(s).

11. Procédé de traitement d'une pièce de traitement dentaire (1) ou d'une pièce brute selon la revendication 1 ou 2 pour la fabrication d'une restauration dentaire, notamment un pilier, une couronne, un bridge ou un assemblage à encliquetage, la pièce de traitement (1) comportant une zone de traitement (B) et une zone de fixation (F),
la pièce de traitement (1) présentant un corps de base cylindrique ayant un axe longitudinal (X), une surface de recouvrement (5), une surface de base (6) et une surface latérale (7), la zone de fixation (F) étant disposée radialement autour du corps de base cylindrique de la zone de traitement (B),
la pièce de traitement (1) comportant une connexion d'implant préfabriquée (8) à l'extrémité faisant face à la zone de fixation (F) pour fixer la pièce de traitement (1) à un implant dentaire,
la pièce de traitement (1) étant fixée, par sa zone de fixation (F), à un support (3) d'un dispositif de traitement (2) et la zone de traitement (B) étant traitée par le dispositif de traitement (2),
la pièce de traitement (1) étant traitée par le dispositif de traitement parallèlement à l'axe longitudinal (X) de la pièce de traitement (1), également en dessous de la zone de fixation, et la zone traitement étant traitée sur la face frontale.
